# EUROPÄISCHE PATENTSCHRIFT

(11) **EP 1 961 948 B1**
(45) Veröffentlichungstag und Bekanntmachung des Hinweises auf die Patenterteilung: **24.10.2012**
(21) Anmeldenummer: 08101895.4
(22) Anmeldetag: 22.02.2008
(51) Int. Cl.: F02M 37/22, B01D 35/30

(54) **Filter, insbesondere Kraftstofffilter**
Filter, particularly fuel filter
Filtre, en particulier filtre de carburant

(30) Priorität: 22.02.2007 DE 202007002785 U
(43) Veröffentlichungstag der Anmeldung: 27.08.2008
(73) Patentinhaber: MANN+HUMMEL GmbH, 71638 Ludwigsburg (DE)
(72) Erfinder: Kraft, Gunther, 71642, Ludwigsburg (DE); Rösgen, André, 73630, Remshalden (DE); Müller, Peter, 76744 Wörth am Rhein (DE)

(56) Entgegenhaltungen:
- EP-A- 0 484 710
- EP-A- 0 537 521
- EP-A- 0 745 763
- EP-A- 1 338 319
- DE-A1- 10 144 698

## Beschreibung

### Technisches Gebiet

Die Erfindung bezieht sich auf einen Filter, insbesondere Kraftstofffilter der im Oberbegriff des Anspruchs 1 angegebenen Gattung.

In der EP 0 537 521 A1 sind verschiedene Ausführungsformen eines Flüssigkeitsfilters mit einem Gehäuse und einem darin angeordneten Filtereinsatz offenbart. Zur Erhöhung der Crash-Sicherheit ist der Filtereinsatz mit einer duktilen Schutzhülle umgeben, um ein Auslaufen der Flüssigkeit nach einer Beschädigung des Gehäuses zu verhindern. Alle Ausgestaltungen zeigen, dass zwischen der Schutzhülle und der Gehäusewand des Flüssigkeitsfilters ein Innenraum angeordnet ist. Bei einem Austausch des Filtereinsatzes wird zwangsläufig die Schutzhülle mit ausgetauscht.
In der EP 1 338 319 A1 ist ein axial aus zwei Gehäusehälften gefügter Kraftstofffilter gezeigt, dessen Gehäusehälften aus zumindest zwei Schichten bestehen, einer elektrisch leitfähigen und einer weiteren nichtelektrisch leitfähigen Schicht. Das Gehäuse erstreckt sich zwischen einem Einlassende und einem Auslassende, wobei sich eine Schicht vom Ende mit dem Einlassstutzen zum Ende mit dem Auslassstutzen hin erstreckt.
Die EP 0 745 763 A2 beschreibt den Aufbau eines antistatischen Kraftstofffilters aus Kunststoff zur Vermeidung von elektrischem Durchschlag durch Aufladung und mit der Möglichkeit, die Diffusion von Kraftstoffkomponenten durch das Filtergehäuse zurückzudrängen. Dies wird erreicht durch einen mindestens dreischichtigen Kunststoffkraftstofffilter mit einer inneren und einer äußeren Schicht aus einem leitfähig ausgerüsteten Kunststoff und einer oder mehreren Schichten aus einem oder mehreren nichtleitfähig ausgerüsteten Kunststoffen eingebettet zwischen den leitfähigen Schichten, wobei die innere und die äußere Schicht miteinander mit einem leitfähigen Pfad bilden,
Die Gehäuse und Deckel von Filtern, insbesondere Kraftstofffiltern, werden üblicherweise in Blech, Aluminiumdruckguss, Aluminiumfließpress oder Kunststoff ausgeführt. Die Ausführungen in Blech bieten zwar eine ausreichende Crashsicherheit, jedoch sind die Herstellungskosten sehr hoch, so dass die Wettbewerbsfähigkeit solcher Filtergehäuse nicht gegeben ist. Bei den Werkstoffen Aluminiumdruckguss, Aluminiumfließpress und Kunststoff ist keine ausreichende Crashsicherheit gegeben, da diese Werkstoffe spröde sind, sich nicht verformen und demzufolge brechen.

Der vorliegenden Erfindung liegt die Aufgabe zugrunde, einen Filter der gattungsgemäßen Art zu schaffen, der kostengünstig ist und eine große Crashsicherheit aufweist.

Diese Aufgabe wird durch einen Filter mit den Merkmalen des Anspruchs 1 gelöst.

### Offenbarung der Erfindung

Durch den Aufbau des Gehäuses aus zwei Schichten mit Kunststoffen unterschiedlicher Duktilität werden die Funktionen nämlich ausreichende Stabilität einerseits und ausreichende Verformbarkeit im Crashfall andererseits jeweils einer der beiden Schichten zugeordnet. Duktilität ist hier die Bezeichnung für die Umformbarkeit von Werkstoffen, wobei einer der Werkstoffe spröder und der andere elastischer ist. Die während des Filterbetriebs auf das Gehäuse einwirkenden Temperaturen und mechanischen Belastungen wie Druck und Schwingung werden von der Schicht mit größerer Härte aufgenommen, so dass dadurch eine Dauerfestigkeit und Beständigkeit gegeben ist. Nach einem Crash ist lediglich eine Kurzzeitbeständigkeit und Haltbarkeit erforderlich, die durch die Schicht aus weichem Kunststoff gegeben ist. Nach einem Crash ist der Filter auf jeden Fall auszutauschen.

Die Kunststoffe der jeweiligen Schichten weisen unterschiedliche Härten auf, was im Allgemeinen bei Werkstoffen unterschiedlicher Duktilität der Fall ist, es können jedoch Sonderfälle auftreten.

Zur Herstellung des Filters mit einem aus zwei Schichten bestehenden Gehäuse kommt die Spritzgusstechnik in Betracht. Dabei ist es möglich, zunächst eine Schicht zu fertigen und diese als Einlegeteil in eine Form zu geben, in die dann das Material für die andere Schicht gespritzt wird. Günstig ist auch ein Zweikomponenten-Spritzgießverfahren, da hierfür lediglich eine Werkzeugform benötigt wird. Alternativ kommt auch die Blasformtechnik in Betracht, wobei es möglich ist, lediglich die innere Schicht auf diese Weise herzustellen oder in einem Mehrkomponenten-Blasformprozess erst die äußere Schicht und danach die innere Schicht zu erzeugen.

Eine bevorzugte Ausgestaltung des Erfindungsgegenstandes besteht darin, dass die beiden das Gehäuse bildenden Kunststoffschichten unmittelbar aneinander liegen. Um die beiden Schichten bezogen auf die Axialrichtung des Gehäuses in ihrer relativen Lage zu sichern, wird vorgeschlagen, dass im Bereich des zylindrischen Mantels Mittel zur formschlüssigen Verbindung der beiden Schichten in Axialrichtung des Gehäuses vorgesehen sind. Hierzu ist es zweckmäßig, dass an einer Schicht mindestens ein Vorsprung ausgebildet ist, der in eine Vertiefung der anderen Schicht greift. Insbesondere bei der Herstellung des Filtergehäuses in einem Mehrkomponenten-Spritzgussprozess oder Mehrkomponenten-Blasformprozess ist es möglich, dass der Vorsprung als radialer Bund ausgeführt wird, der in einer Radialnut der anderen Schicht liegt.

Gemäß einer möglichen Ausführungsform der Erfindung besteht die innere Schicht aus einem spröderen bzw. harten Kunststoff und die äußere Schicht aus einem elastischeren bzw. weichen Kunststoff. Dabei kommen für die innere Schicht Polyamid oder POM in Betracht, während die äußere Schicht aus einem thermoplastischen Elastomer besteht. Als thermoplastisches Elastomer kommen beispielsweise Polypropylen mit Ethylen/Propylen-Dien-Terpolymer oder thermoplastische Vulkanisate in Betracht.

Gemäß einer alternativen Ausführungsform besteht die innere Schicht aus einem elastischeren bzw. weichen Kunststoff und die äußere Schicht aus einem spröderen bzw. harten Kunststoff. Als Kunststoff für die innere Schicht kommen Polyethylen, Polyamid oder POM in Betracht, wobei diese Schicht vorzugsweise beständig gegen Kraftstoff ist. Die äußere Schicht besteht bevorzugt aus einem Thermoplast, insbesondere Polypropylen mit 20% Talk. Sofern die innere Schicht aus dem weichen Kunststoff besteht, so kann diese Schicht dünnwandig, bzw. folienartig ausgeführt sein, wobei die Materialstärke ca. 0,3 mm bis 3 mm aufweist und vorzugsweise zwischen 1 mm und 2,5 mm beträgt.

### Kurze Beschreibung der Zeichnungen

Ein Ausführungsbeispiel des Erfindungsgemäßen Filters ist nachstehend anhand der Zeichnung näher erläutert. In der Zeichnung zeigt:

- Fig. 1: einen Längsschnitt durch einen Filter

- Fig. 2: eine vergrößerte Darstellung der Einzelheit II in Fig. 1.

### Ausführungsform(en) der Erfindung

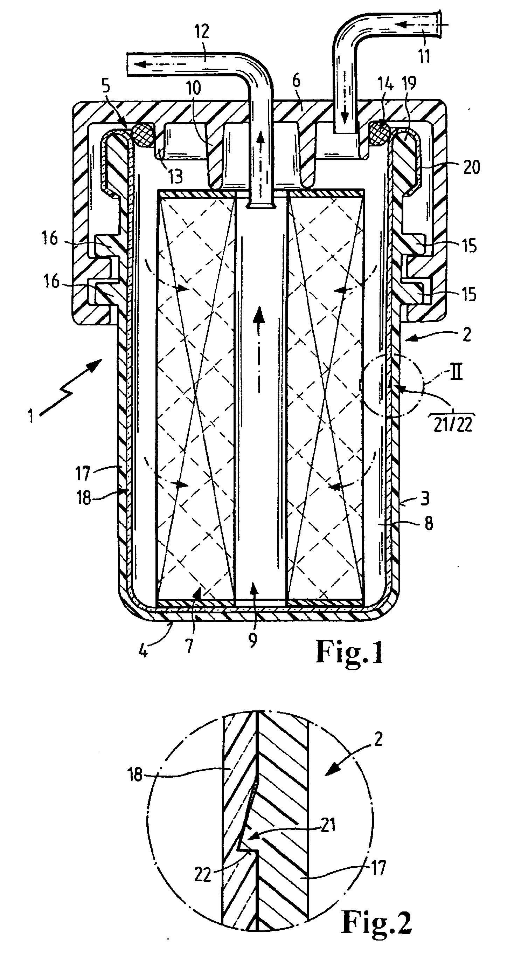

Die Fig. 1 zeigt einen Filter 1, der aus einem Gehäuse 2 mit einem darin angeordneten Filterelement 7 besteht. Das Gehäuse 2 umfasst einen zylindrischen Mantel 3 mit einer stirnseitigen Wand 4, die in der dargestellten Einbaulage den Boden des Gehäuses 2 bildet. Das in der Darstellung obere Ende des Gehäuses 2 ist eine offene Stirnseite 5, die mittels eines Deckels 6 verschlossen ist. Zur Halterung des Deckels 6 an dem zylindrischen Mantel 3 sind zwei in einem axialen Abstand zueinander angeordnete radial Bunde 15 vorgesehen, die jeweils von an der Innenseite eines zylindrischen Abschnitts des Deckels 6 radial nach innen gerichtete Rippen 16 hintergriffen werden. Das Filterelement 7 ist innerhalb des Gehäuses 2 derart positioniert, dass ein äußerer Ringraum 8 gebildet ist, in den die über einen Zulaufanschluß 11 im Deckel 6 zufließende Flüssigkeit gelangt. Die gefilterte Flüssigkeit wird aus dem Innenraum 9 durch einen ebenfalls im Deckel 6 befestigten Rücklaufanschluß 12 abgeleitet.

Um das Filterelement 7 sicher in seiner Position zu halten, sind an dem Deckel 6 in axialer Richtung verlaufende Zapfen 10 vorgesehen. An der Innenseite des Deckels 6 ist außerdem ein Ringelement 13 angeordnet, das einen vorgesehenen Einbauraum für einen Dichtungsring 14 begrenzt, so dass der Dichtungsring 14 eine Anlage an drei Flächen hat, nämlich an dem Deckel 6, an dem Ringelement 13 und an der inneren Schicht im Bereich der offenen Stirnseite 5. Das Gehäuse 2 besteht aus einer äußeren Schicht 17 und einer inneren Schicht 18, die direkt aufeinander liegen.

Alternativ hierzu ist es auch möglich, sofern das Material der inneren Schicht 18 eine ausreichende Elastizität aufweist, das Gehäuse 2 mit der inneren Schicht 18 unter entsprechender Vorspannung direkt an den Deckel 6 anzulegen, so dass der Innenraum des Filters zuverlässig gegen die Außenseite abgedichtet ist. Auf diese Weise kann auf den Dichtungsring 14 verzichtet werden.

Die äußere Schicht 17 besteht aus einem Kunststoff, der wesentlich härter ist als das Material der inneren Schicht 18. Bei dem Material für die äußere Schicht 17 handelt es sich um einen thermoplastischen Kunststoff wie beispielsweise Polypropylen mit 20% Talk. Dieses Material weist eine ausreichende Festigkeit auf, eine Beständigkeit gegen Kraftstoff ist nicht erforderlich. Als Material der inneren Schicht 18 kommen insbesondere Polyethylen, Polyamid oder POM in Betracht. Die innere Schicht ist keinen wesentlichen mechanischen Beanspruchungen ausgesetzt und kann daher relativ dünnwandig ausgeführt sein. Sofern es sich um einen Kraftstofffilter handelt, muß dieses Material jedoch eine Beständigkeit gegen Kraftstoff aufweisen. Im Bereich der offenen Stirnseite 5 ist die äußere Schicht 17 als Wulst 19 gestaltet, wobei dieser Wulst 19 auch an der Außenseite von dem Material der inneren Schicht 18 überzogen ist, so dass sich eine Halterung 20 ergibt.

In Fig. 2 ist vergrößert die Einzelheit II in Fig. 1 dargestellt. Es ist dabei ersichtlich, dass das Gehäuse 2 Mittel zur formschlüssigen Verbindung der äußeren Schicht 17 mit der inneren Schicht 18 aufweist. Zu diesem Zweck ist an der äu-βeren Schicht 17 ein radialer Vorsprung 21 ausgebildet, der in eine entsprechende Nut 22 der Schicht 18 greift. Durch diese Maßnahme wird die relative Lage der beiden Schichten 17 und 18 in Axialrichtung des Gehäuses 2 gesichert.

In einem Crashfall bricht unter Kraftbeaufschlagung die äußere Schicht 17, da diese aus einem relativ spröden Kunststoff besteht. Da die innere Schicht 18 aus einem weichen Kunststoff besteht, stellt diese die Dichtheit sicher. Da eine Dauerfestigkeit und Beständigkeit nur bis zu einem Crashfall gegeben sein muß, sind die Anforderungen an die innere Schicht lediglich eine Kurzeitbeständigkeit und kurze Haltbarkeit. Auf jeden Fall ist nach einem Crashfall der Filter auszutauschen.

Es liegt im Rahmen der Erfindung, das Gehäuse 2 so auszuführen, dass die innere Schicht 18 aus einem harten Kunststoff und die äußere Schicht 17 aus einem weichen Kunststoff besteht. Für die harte innere Schicht 18 kommen dabei Polyamid oder POM in Betracht. Die äußere weiche Schicht kann aus einem thermoplastischen Elastomer bestehen.

## Patentansprüche

1. Filter, insbesondere Kraftstofffilter, mit einem in einem Gehäuse (2) angeordneten Filterelement (7), wobei das Gehäuse (2) einen im wesentlichen zylindrischen Mantel (3) mit auf einer Stirnseite angeordneten Wand (4) umfasst und an der anderen Stirnseite (5) mittels eines Deckels (6) verschlossen ist, wobei das Filterelement (7) innerhalb des Gehäuses (2) derart positioniert ist, dass ein äußerer Ringraum (8) gebildet ist, in den die über einen Zulaufanschluss (11) im Deckel (6) zufließende Flüssigkeit gelangt, wobei die gefilterte Flüssigkeit aus einem Innenraum (9) durch einen ebenfalls im Deckel (6) befestigten Rücklaufanschluss (12) abgeleitet wird, **dadurch gekennzeichnet, dass** das Gehäuse (2) aus zwei Schichten (17, 18) unterschiedlicher Kunststoffe besteht, wobei die Kunststoffe unterschiedliche Duktilität aufweisen, wobei die beiden das Gehäuse (29) bildenden Kunststoffschichten (17, 18) unmittelbar aneinander liegen.

2. Filter nach Anspruch 1, **dadurch gekennzeichnet, dass** die Kunststoffe eine unterschiedliche Härte aufweisen.

3. Filter nach einem der Ansprüche 1 oder 2, **dadurch gekennzeichnet, dass** im Bereich des Mantels (3) Mittel zur formschlüssigen Verbindung der beiden Schichten (17, 18) in Axialrichtung des Gehäuses (2) vorgesehen sind.

4. Filter nach Anspruch 3, **dadurch gekennzeichnet, dass** an einer Schicht (17) mindestens ein Vorsprung (21) ausgebildet ist, der in eine Vertiefung der anderen Schicht (18) greift.

5. Filter nach Anspruch 4, **dadurch gekennzeichnet, dass** der Vorsprung (21) ein radialer Bund ist, der in einer radialen Nut (22) der anderen Schicht (18) liegt.

6. Filter nach einem der Ansprüche 2 bis 5, **dadurch gekennzeichnet, dass** die innere Schicht (18) aus einem harten Kunststoff und die äußere Schicht (17) aus einem weichen Kunststoff besteht.

7. Filter nach Anspruch 6, **dadurch gekennzeichnet, dass** die innere Schicht (18) aus POM oder Polyamid und die äußere Schicht (17) aus einem thermoplastischen Elastomer besteht.

8. Filter nach Anspruch 7, **dadurch gekennzeichnet, dass** das thermoplastische Elastomer ein PP+EPDM oder ein thermoplastisches Vulkanisat ist.

9. Filter nach einem der Ansprüche 2 bis 5, **dadurch gekennzeichnet, dass** die innere Schicht (18) aus einem weichen Kunststoff und die äußere Schicht (17) aus einem harten Kunststoff besteht.

10. Filter nach Anspruch 9, **dadurch gekennzeichnet, dass** die innere Schicht (18) mit einer bestimmten Vorspannung an einem Deckel (6) anliegt.

11. Filter nach Anspruch 9, **dadurch gekennzeichnet, dass** die innere Schicht aus Polyethylen, Polyamid oder POM besteht und vorzugsweise beständig gegen Kraftstoff ist.

12. Filter nach Anspruch 9 oder 11, **dadurch gekennzeichnet, dass** die äußere Schicht (17) aus einem Thermoplast, insbesondere Polypropylen mit 20% Talk besteht.

13. Filter nach Anspruch 11, **dadurch gekennzeichnet, dass** die innere Schicht dünnwandig bzw. folienartig ausgeführt ist und eine Materialstärke von ca. 0,3 mm bis 3 mm aufweist.

14. Filter nach Anspruch 13, **dadurch gekennzeichnet, dass** die Materialstärke 1 mm bis 2,5 mm beträgt.

15. Filter nach einem der Ansprüche 1 bis 14, **dadurch gekennzeichnet, dass** das Gehäuse (2) in Spritzgusstechnik, vorzugsweise durch ein Zweikomponenten-Spritzgussverfahren hergestellt ist.

16. Filter nach einem der Ansprüche 1 bis 14, **dadurch gekennzeichnet, dass** das Gehäuse (2) durch ein Blasformverfahren hergestellt ist.

## Claims

1. Filter, in particular fuel filter, with a filter element (7) disposed in a housing (2), the housing (2) comprising a substantially cylindrical jacket (3) with a wall (4) disposed on one end face and being closed on the other end face (5) by means of a cover (6), the filter element (7) being positioned inside the housing (2) in such a way that an outer annular space (8) is created into which flows liquid via an intake connection (11) in the cover (6), the filtered liquid being discharged from an interior area (9) through a return connection (12) that is also attached in the cover (6), **characterized in that** the housing (2) consists of two layers (17, 18) of different plastics, the plastics featuring different ductility, both plastic layers (17, 18) forming the housing (29) being immediately adjacent.

2. Filter according to claim 1, **characterized in that** the plastics feature a different hardness.

3. Filter according to one of the claims 1 or 2, **characterized in that** in the area of the jacket (3) means for a form-fit connection of both layers (17, 18) are provided in axial direction of the housing (2).

4. Filter according to claim 3, **characterized in that** at least one protrusion (21) that engages into a recess of the other layer (18) is formed on a layer (17).

5. Filter according to claim 4, **characterized in that** the protrusion (21) is a radial flange that is lying in a radial groove (22) of the other layer (18).

6. Filter according to one of the claims 2 to 5, **characterized in that** the inner layer (18) consists of hard plastic and the outer layer (17) of soft plastic.

7. Filter according to claim 6, **characterized in that** the inner layer (18) consists of POM or polyamide and the outer layer (17) of a thermoplastic elastomer.

8. Filter according to claim 7, **characterized in that** the thermoplastic elastomer is a PP+EPDM or a thermoplastic vulcanisate.

9. Filter according to one of the claims 2 to 5, **characterized in that** the inner layer (18) consists of soft plastic and the outer layer (17) of hard plastic.

10. Filter according to claim 9, **characterized in that** the inner layer (18) is applied to a cover (6) with a defined pretension.

11. Filter according to claim 9, **characterized in that** the inner layer consists of polyethylene, polyamide or POM and that it is preferably resistant to fuel.

12. Filter according to claim 9 or 11, **characterized in that** the outer layer (17) consists of thermoplastic, in particular of polypropylene with 20% talcum.

13. Filter according to claim 11, **characterized in that** the inner layer is thin-walled and foil-like, respectively, and features a material thickness of approx. 0.3 mm to 3 mm.

14. Filter according to claim 13, **characterized in that** the material thickness is between 1 mm to 2.5 mm.

15. Filter according to one of the claims 1 to 14, **characterized in that** the housing (2) is manufactured using injection molding technology, preferably by means of a two-component injection molding technology.

16. Filter according to one of the claims 1 to 14, **characterized in that** the housing (2) is manufactured using a blow-molding process.

## Revendications

1. Filtre, notamment filtre à carburant, avec un élément filtrant (7) logé dans un boîtier (2), le boîtier (2) comprenant une enveloppe (3) essentiellement cylindrique avec une paroi (4) placée sur une face frontale et étant obturé, sur l'autre face frontale (5), au moyen d'un couvercle (6), l'élément filtrant (7) étant positionné à l'intérieur du boîtier (2) de sorte qu'il se forme un espace annulaire (8) externe dans lequel entre le liquide arrivant par un raccord d'arrivée (11) monté dans le couvercle (6), le liquide filtré étant évacué d'un espace intérieur (9) par un raccord de retour (12) également fixé dans le couvercle (6), **caractérisé en ce que** le boîtier (2) est composé de deux couches (17, 18) réalisées dans des matières plastiques différentes, ces matières plastiques faisant preuve de ductilités différentes, les deux couches plastiques (17, 18) formant le boîtier (29) étant directement juxtaposées.

2. Filtre selon la revendication 1, **caractérisé en ce que** les matières plastiques présentent des duretés différentes.

3. Filtre selon l'une des revendications 1 ou 2, **caractérisé en ce que** des éléments destinés à former un assemblage craboté des deux couches (17, 18) en sens axial du boîtier (2) sont prévus dans la zone de l'enveloppe (3).

4. Filtre selon la revendication 3, **caractérisé en ce qu'**au moins une saillie (21) est formée sur une couche (17) et que cette saillie est en prise dans un creux de l'autre couche (18).

5. Filtre selon la revendication 4, **caractérisé en ce que** la saillie (21 ) est un collet radial qui est inséré dans une rainure radiale (22) de l'autre couche (18).

6. Filtre selon l'une des revendications 2 à 5, **caractérisé en ce que** la couche intérieure (18) est constituée d'une matière plastique dure et la couche extérieure (17) est constituée d'une matière plastique molle.

7. Filtre selon la revendication 6, **caractérisé en ce que** la couche intérieure (18) est constituée de POM ou de polyamide et la couche extérieure (17) est constituée d'un élastomère thermoplastique.

8. Filtre selon la revendication 7, **caractérisé en ce que** l'élastomère thermoplastique est un PP+EPDM ou un vulcanisat thermoplastique.

9. Filtre selon l'une des revendications 2 à 5, **caractérisé en ce que** la couche intérieure (18) est constituée d'une matière plastique molle et la couche extérieure (17) est constituée d'une matière plastique dure.

10. Filtre selon la revendication 9, **caractérisé en ce que** la couche intérieure (18) est appliquée avec une prétension définie sur un couvercle (6).

11. Filtre selon la revendication 9, **caractérisé en ce que** la couche intérieure est constituée de polyéthylène, polyamide ou POM et est de préférence résistante aux carburants.

12. Filtre selon la revendication 9 ou 11, **caractérisé en ce que** la couche extérieure (17) est constituée d'une matière thermoplastique, notamment de polypropylène avec 20 % talc.

13. Filtre selon la revendication 11, **caractérisé en ce que** la couche intérieure est réalisée avec une paroi fine et/ou de manière similaire à un film et présente une épaisseur de matériau d'env. 0,3 mm à 3 mm.

14. Filtre selon la revendication 13, **caractérisé en ce que** l'épaisseur de matériau est comprise entre 1 mm et 2,5 mm.

15. Filtre selon l'une des revendications 1 à 14, **caractérisé en ce que** le boîtier (2) est fabriqué selon une technique de moulage par injection, de préférence selon un procédé de moulage par injection à deux composants.

16. Filtre selon l'une des revendications 1 à 14, **caractérisé en ce que** le boîtier (2) est fabriqué selon un procédé de soufflage sur matrice.
